# EUROPÄISCHE PATENTSCHRIFT

(11) **EP 0 821 150 B1**
(45) Veröffentlichungstag und Bekanntmachung des Hinweises auf die Patenterteilung: **09.04.2003**
(21) Anmeldenummer: 97110476.5
(22) Anmeldetag: 26.06.1997
(51) Int. Cl.: F02D 43/00, F02D 37/02, F02D 41/34, F02D 41/14

(54) **Verfahren und Vorrichtung zur Motormomenteinstellung bei einem Verbrennungsmotor**
Method and apparatus for adjusting the torque of an internal combustion engine
Méthode et dispositif pour ajuster le couple d'un moteur à combustion interne

(30) Priorität: 26.07.1996 DE 19630213
(43) Veröffentlichungstag der Anmeldung: 28.01.1998
(73) Patentinhaber: DaimlerChrysler AG, 70567 Stuttgart (DE)
(72) Erfinder: Scherer, Matthias, 73730 Esslingen (DE); Hemberger, Hans-Hubert, 73733 Esslingen (DE)

(56) Entgegenhaltungen:
- EP-A- 0 537 227
- EP-A- 0 764 778
- DE-A- 4 232 974
- US-A- 4 732 125
- PATENT ABSTRACTS OF JAPAN vol. 015, no. 432 (M-1175), 5. November 1991 (1991-11-05) & JP 03 182667 A (NISSAN MOTOR CO LTD), 8. August 1991 (1991-08-08)

## Beschreibung

Die Erfindung bezieht sich auf ein Verfahren und eine Vorrichtung zur Motormomenteinstellung bei einem Verbrennungsmotor mit Zündzeitpunkt- und Luftmassenstromregulierung, d.h. bei einem Ottomotor, oder mit Regulierung des Kraftstoffeinspritzbeginns und der Kraftstoffeinspritzdauer, d.h. bei einem Dieselmotor.

Moderne Ottomotoren besitzen meist eine elektronische Drosselklappenansteuerung zur Luftmassenstromregulierung, wobei das Fahrpedal von der Drosselklappe mechanisch entkoppelt ist. Zur Regelung des zugehörigen Antriebsstranges eines Fahrzeugs nutzen neuere Motor-Getriebe-Managementkonzepte eine Momentenschnittstelle, wobei die Einstellung des gewünschten Motormomentes üblicherweise entweder statisch mit Hilfe eines die Größen Luftmassenstrom, Motordrehzahl und Motormoment verknüpfenden Kennfeldes oder dynamisch mit Hilfe einer Luftmassenstromregelung vorgenommen wird. Die Dynamik einer Motormomentregelung allein über eine Luftmassenstromregelung ist stark durch die endliche Geschwindigkeit des Drosselklappenstellgliedes und vor allem durch die Füllungseigenschaften des Saugrohres begrenzt. Bestimmte Motorfunktionen, wie Leerlaufregelung oder Zughochschaltung bei Automatikgetrieben, erfordern jedoch eine hochdynamische Motormomentänderung, die von der quasistatisch wirkenden Luftmassenstromregelung nicht zufriedenstellend erzielt werden kann. Herkömmlicherweise wird die angeforderte hochdynamische Motormomentänderung daher durch einen Zündungseingriff realisiert, ohne daß der daraus resultierende Motormomenteingriff mit der Luftmassenstromregelung koordiniert ist. Dieser Zündungseingriff besteht meist in einer geringfügigen Verschiebung des grundsätzlich motorbetriebspunktabhängig vorgegebenen Zündzeitpunktes. Bei Dieselmotoren mit elektronischer Kraftstoffeinspritzung erfolgt die Einstellung eines angeforderten Motormomentes herkömmlicherweise ausschließlich über eine entsprechende Wahl der Einspritzdauer, während der Einspritzbeginn üblicherweise motorbetriebspunktabhängig vorgegeben wird.

In der Patentschrift DE 42 15 107 C1 ist ein Verfahren zur Steuerung einer Brennkraftmaschine offenbart, bei dem aus der Winkelstellung des Fahrpedals ein Sollwert für das auf die Fahrbahn übertragene Moment ermittelt wird. Aus diesem Sollwert wird unter Berücksichtigung der Übertragungsfunktion des Motors und des Antriebsstrangs die in die Brennkraftmaschine einzuspritzende Kraftstoffmenge und daraus unter Berücksichtigung eines Sollwertes für das Kraftstoff/Luft-Verhältnis mittels Invertierung einer vorgegebenen Saugrohrdynamikfunktion ein Sollwert für den erforderlichen Luftmassenstrom bestimmt, der dann durch entsprechende Verstellung eines Drosselklappenstellgliedes eingeregelt wird. Die tatsächlich eingespritze Kraftstoffmenge wird dann anhand des gemessenen Luftmassenstrom-Istwertes bestimmt.

Aus der Offenlegungsschrift DE 44 40 640 A1 ist ein Verfahren zur Instationärsteuerung von Brennkraftmaschinen bekannt, mit dem die Speicherwirkung des Saugrohres berücksichtigt werden soll. Dazu wird in einem Speicher eine Luftmassenstrom-Dichte-Funktion abgelegt, anhand derer eine Steuereinheit einen Wert für den Luftmassenstrom am Zylindereingang in Abhängigkeit von der Saugrohrluftdichte und der Motordrehzahl erzeugt, aus dem dann ein zugehöriger Motorlastwert bestimmt wird.

Bei einem in der Offenlegungsschrift DE 41 12 908 A1 beschriebenen Brennstoffsteuergerät für einen Verbrennungsmotor ist zur Erzielung einer schnellen Ansprechreaktion der Brennstoffsteuerung während einer Motorbeschleunigung ohne Verringerung des Motorausgangsdrehmomentes vorgesehen, in einem solchen Beschleunigungsfall nach Einspritzen einer ersten, auf der Basis der Ansauglufttemperatur und des Zylinderinnendrucks berechneten, ersten Einspritzmenge eine zweite Einspritzmenge, die auf der Basis des Motorbeschleunigungszustandes berechnet wird, im Anschluß an die erste Einspritzung einzuspritzen.

Eine in der Offenlegungsschrift DE 39 42 966 A1 angegebene Einrichtung zur Steuerung und/oder Regelung der Kraftstoffzumessung und/oder des Zündwinkels einer Brennkraftmaschine ist so ausgelegt, dass im stationären Betrieb stets der Messwert einer periodisch schwankenden, einmal pro Zündung kurbelwinkelsynchron gemessenen Größe, beispielsweise des Saugrohrdrucks, bei derselben Kurbelwellenstellung zwecks Steuerung bzw. Regelung der Kraftstoffzumessung oder des Zündwinkels verwendet wird, während im dynamischen Betrieb jeder Messwert zur Steuerung bzw. Regelung der Kraftstoffzumessung bzw. des Zündwinkels verwendet wird. Damit soll der Übergang vom stationären zum dynamischen Motorbetrieb sehr schnell erkannt und für die Einstellung der Kraftstoffzumessung oder des Zündwinkels berücksichtigt werden können.

In der Patentschrift DE 43 15 885 C1 wird ein Verfahren zur Einstellung des Sollausgangsdrehmomentes einer Brennkraftmaschine beschrieben, bei dem in Abhängigkeit von der Motordrehzahl und dem Drosselklappenöffnungswinkel aus dem Sollausgangsdrehmoment ein Luftmassenstrom-Sollwert oder ein Motorlast-Sollwert ermittelt wird und der gemessene Istwert durch eine Ansteuerung des Drosselklappenstellglieds auf den jeweiligen Sollwert eingeregelt wird. Die Umrechnung zwischen Last- und Luftmassenstromregelung erfolgt mittels eines Lastfilters, das die in dynamischen Betriebszuständen auftretenden Abweichungen des gemessenen Luftmassenstroms vom tatsächlich in den Brennraum strömenden Luftmassenstrom kompensiert. Der Übergang zwischen den beiden Regelverfahren kann kontinuierlich oder geschaltet, vorzugsweise unter Verwendung einer einseitigen Hysterese beim Übergang von der Motorlastregelung zur Luftmassenstromregelung, erfolgen.

Bei einem in der Patentschrift US 4.732.125 offenbarten System zur Regelung des von einer Brennkraftmaschine abgegebenen Drehmoments wird eine Zündzeitpunktkorrektur in Abhängigkeit von der gesamten Differenz zwischen Sollwert und Istwert des Motormoments vorgenommen, wobei dies insbesondere für Motorbetriebszustände gedacht ist, bei denen sich eine Drosselklappe der Brennkraftmaschine konstant in einem ganz oder jedenfalls weitestgehend geschlossenen Zustand befindet.

In der Offenlegungsschrift DE 42 32 974 A1 sind ein Verfahren und eine Vorrichtung zum Einstellen des Drehmoments eines Ottomotors beschrieben, bei denen eine Drosselklappeneinstellung und eine Zündwinkelverstellung in Abhängigkeit von einem angeforderten Motorsollmoment vorgenommen werden. Eine anfänglich wegen der Trägheit der Wirkung von Drosselklappenverstellungen bei raschen Änderungen des angeforderten Motorsollmomentes auftretende Regeldifferenz zwischen Sollmoment und dem hierzu erfassten Motormoment-Istwert wird der Zündwinkelverstelleinheit zugeführt und kann von dieser ausgeregelt werden. Dabei kann eine allmähliche Übernahme der Wirkung der Zündwinkelverstellung durch die Drosselklappenverstellung vorgesehen sein, wozu eine zugehörige Motormoment-Regeldifferenz anhand eines geeignet ermittelten zündwinkelnormierten Motormoment-Istwertes bestimmt und zusätzlich auf einen Integrierer gegeben wird, dessen Ausgangssignal zum angeforderten Motorsollmoment an der Eingangsseite der Drosselklappen-Einstellstufe hinzuaddiert wird.

Der Erfindung liegt als technisches Problem die'Bereitstellung eines Verfahrens und einer Vorrichtung der eingangs genannten Art zugrunde, mit denen das Motormoment mit möglichst geringem Aufwand sowohl im stationären Motorbetrieb als auch vor allem im instationären Motorbetrieb mit vergleichweise kurzer Reaktionszeit und unter Gewährleistung eines kraftstoffverbrauchs- und abgasemissionsoptimalen Motorbetriebs auf das jeweils gewünschte, angeforderte Motorsollmoment eingeregelt werden kann.

Die Erfindung löst dieses Problem durch die Bereitstellung eines Verfahrens mit den Merkmalen des Anspruchs 1 sowie einer Vorrichtung mit den Merkmalen des Anspruchs 4. Dabei ist vorgesehen, das angeforderte Motorsollmoment in einen dynamischen Anteil und einen verbleibenden, quasistatischen Anteil aufzuspalten. Der dynamische Anteil wird als Vorgabe für eine entsprechende Einstellung des Zündzeitpunktes bei einem Ottomotor bzw. des Einspritzbeginns bei einem Dieselmotor, d.h. als Führungsgröße für eine motorwunschmomentabhängige Verschiebung des Zündzeitpunktes bzw. des Einspritzbeginns herangezogen, während der quasistatische Sollmomentanteil mittels entsprechender Einstellung des Luftmassenstroms bei einem Ottomotor bzw. der Einspritzdauer bei einem Dieselmotor eingeregelt wird. Unter dem Gesichtspunkt minimaler Abgasemission und minimalen Kraftstoffverbrauchs wird zweckmäßigerweise die Variation des Zündzeitpunktes bzw. des Einspritzbeginns so klein wie möglich gehalten. Dies bedeutet, daß der dynamische Sollmomentanteil vorzugsweise genau denjenigen Anteil des angeforderten Motorsollmomentes darstellt, auf den das Motormoment durch die quasistatisch, d.h. träger reagierende Luftmassenstrom- bzw. Einspritzdauereinstellung allein nicht mehr eingeregelt werden kann. Durch dieses Verfahren und diese Vorrichtung werden folglich die quasistatische Motormomenteinstellung über die Luftmassenstrom- bzw. Einspritzdauerregulierung einerseits und die hochdynamische Motormomenteinstellung über die Zündzeitpunkt- bzw. Einspritzbeginnregulierung andererseits in einer optimalen Weise miteinander koordiniert.

Gemäß einem nach Anspruch 2 weitergebildeten Verfahren und einer nach Anspruch 5 weitergebildeten Vorrichtung wird der dynamische Sollmomentanteil durch eine Hochpaßfilterung des angeforderten Motorsollmomentes mit einer motorbetriebspunktabhängig gewählten Abklingzeitkonstante ermittelt.

Alternativ ist bei einem nach Anspruch 3 weitergebildeten Verfahren und einer nach Anspruch 6 weitergebildeten Vorrichtung eine modellbasierte Schätzung des von der Luftmassenstrom- bzw. Einspritzdauerregulierung bewältigten, quasistatischen Sollmomentanteils vorgesehen, wobei zur Gewinnung des dynamischen Sollmomentanteils der Schätzwert vom angeforderten Motorsollmoment subtrahiert wird. Im einfachsten Fall kann das Modell durch ein Kennfeld des quasistatischen Istmomentanteils in Abhängigkeit von der Motordrehzahl, der Motorkühlwassertemperatur sowie beim Ottomotor von der Motorlast und dem Zündzeitpunkt und beim Dieselmotor von der Kraftstoffmenge und damit der Einspritzdauer und dem Einspritzbeginn gebildet sein.

Bevorzugte Ausführungsformen der Erfindung sind in der Zeichnungen dargestellt und werden nachfolgend beschrieben. Hierbei zeigen:
- Fig. 1: ein Blockdiagramm einer Vorrichtung zur Motormomenteinstellung bei einem Ottomotor, die einen dynamischen Sollmomentanteil mittels Hochpaßfilterung ermittelt,
- Fig. 2: ein Blockdiagramm einer Vorrichtung zur Motormomenteinstellung bei einem Dieselmotor, die einen dynamischen Sollmomentanteil mittels Hochpaßfilterung ermittelt,
- Fig. 3: ein Blockdiagramm einer Vorrichtung zur Motormomenteinstellung bei einem Ottomotor, die einen dynamischen Sollmomentanteil mittels modellbasierter Schätzung eines quasistatischen Istmomentanteils bestimmt,
- Fig. 4: ein Blockdiagramm einer Vorrichtung zur Motormomenteinstellung bei einem Dieselmotor, die einen dynamischen Sollmomentanteil mittels modellbasierter Schätzung eines quasistatischen Istmomentanteils bestimmt, und
- Fig. 5: ein Diagramm zur Veranschaulichung der Wirkungsweise der Vorrichtungen der Fig. 1 bis 4 bei einer plötzlichen Änderung des Motorsollmoments.

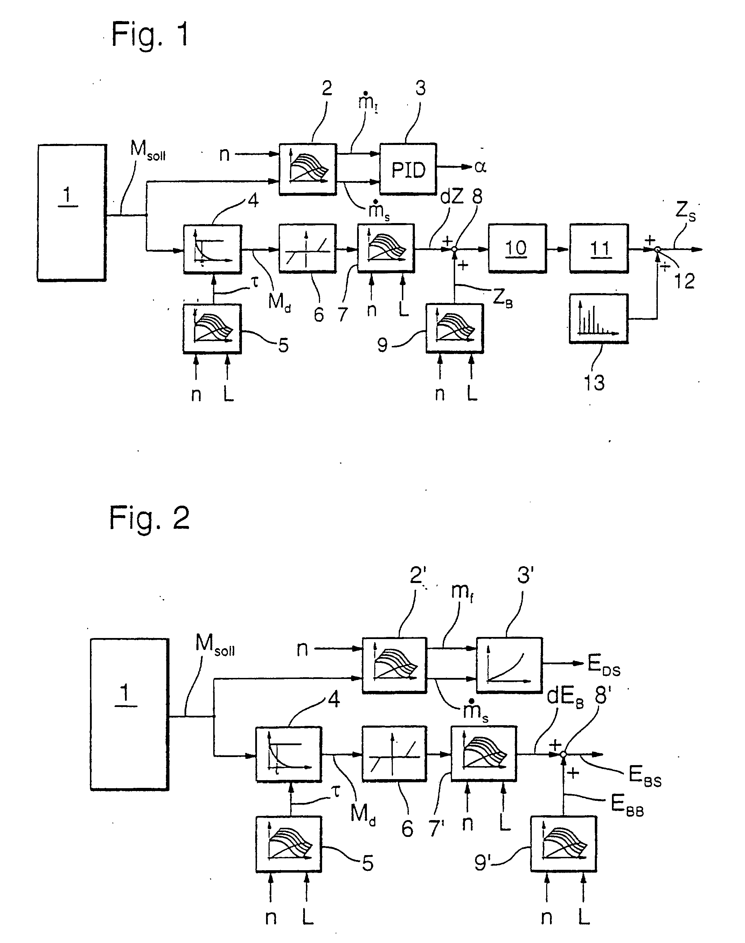

Die Fig. 1 bis 4 zeigen jeweils als Blockdiagramm verschiedene Vorrichtungen zur Motormomenteinstellung bei Otto- bzw. Dieselmotoren. Zum besseren Verständnis sind die sich funktionell entsprechenden Komponenten und gleiche physikalische Größen in den verschiedenen Figuren mit denselben Bezugszeichen belegt.

Die Fig. 1 zeigt eine für einen Ottomotor geeignete Vorrichtung zur Motormomenteinstellung. Eingangsseitig ist eine Motormoment-Koordinationseinheit (1) vorgesehen, an deren Ausgang das beispielsweise vom Fahrer am Fahrpedal angeforderte Motorsollmoment (Mₛₒₗₗ) abgegeben wird. Dieses Motorsollmomentsignal (Mₛₒₗₗ) wird zum einen einer Einrichtung zur Luftmassenstromregelung und zum anderen einer Hochpaßfilterstufe zugeführt, die einer Einrichtung zur Zündzeitpunkteinstellung vorgeschaltet ist. Die Einrichtung zur Luftmassenstromregelung enthält eine eingangsseitige Luftmassenberechnungseinheit (2) und einen anschließenden PID-Luftmassenregler (3). Der Luftmassenberechnungseinheit (2) ist eingangsseitig eine Information über die momentane Motordrehzahl (n) sowie das angeforderte Motorsollmoment (Mₛₒₗₗ) zugeführt. Daraus berechnet sie anhand eines abgelegten Kennfeldes den Luftmassenstrom-Sollwert (ṁ_{S}). Außerdem erfaßt die Luftmassenberechnungseinheit (2) über eine entsprechende Sensorik den Luftmassenstrom-Istwert (ṁ_{I}) und leitet diesen Istwert (ṁ_{I}) ebenso wie den zugehörigen Sollwert (ṁₛ) an den PID-Luftmassenstromregler (3) weiter, der daraus das geeignete Stellsignal (α) für eine luftmassenstromregulierende Drosselklappe ermittelt. Bekanntermaßen vermag die von dieser Luftmassenstromregelung realisierbare Motormomenteinstellung einer hochdynamischen Motorsollmomentänderung aufgrund der endlichen Drosselklappenverstellgeschwindigkeit und vor allem aufgrund der Saugrohrfüllungseigenschaften nur mit einer merklichen Trägheit zu folgen, d.h. sie vermag nur einen quasistatischen Motorsollmomentanteil auszuregeln.

Um den über diesen quasistatischen Anteil hinausgehenden dynamischen Sollmomentanteil ausregeln zu können, ist parallel zu diesem Luftmassenregelungszweig der Zündzeitpunkteinstellzweig mit eingangsseitiger Hochpaßfilterstufe vorgesehen, der auf plötzliche Motorsollmomentänderungen sehr rasch zu reagieren vermag, wobei aus Abgasemissions- und Kraftstoffverbrauchsgründen die von diesem Zweig bewirkte Zündzeitpunktverschiebung so gering wie möglich gehalten wird. Dies bedeutet, daß der Zündzeitpunkteinstellzweig nur zur Einregelung gerade desjenigen dynamischen Motorsollmomentanteils benutzt wird, der nicht vom luftmassenstromregelnden Zweig einregelbar ist. Die Hochpaßfilterstufe bestimmt genau diesen dynamischen Sollmomentanteil (M_{d}) und besteht hierzu aus einem Hochpaßfilter (4) mit einstellbarer Abklingzeitkonstante (τ) und aus einer Zeitkonstanten-Kennfeldeinheit (5), welche die Abklingzeitkonstante (τ) für das Hochpaßfilter (4) anhand eines abgelegten Kennfeldes abhängig von der Motordrehzahl (n) und der Motorlast (L) vorgibt. Beispielsweise wird bei größerer Motordrehzahl (n) eine größere Abklingzeitkonstante (τ) eingestellt. Dadurch filtert das Hochpaßfilter (4) den dynamischen Motorsollmomentanteil (M_{d}) motorbetriebspunktabhängig aus dem ihm zugeführten Motorsollmoment (Mₛₒₗₗ) aus und gibt ihn an die nachgeschaltete Einrichtung zur Zündzeitpunkteinstellung ab. Die Hochpaßeigenschaft der Hochpaßfilterstufe bewirkt, daß der dynamische Sollmomentanteil (M_{d}) bei einer Änderung des Motormomentwunsches nach Abklingen des Instationärvorgangs bei konstanter Motorlast vollständig verschwindet, was eine. Rückführung des Motorbetriebszustandes in den verbrauchs- und emissionsoptimalen Bereich sicherstellt.

Die Einrichtung zur Zündzeitpunkteinstellung empfängt den vom Hochpaßfilter (4) abgegebenen, dynamischen Sollmomentanteil (M_{d}) über eine eingangsseitige Totzoneneinheit (6), mit der unerwünschte, sehr kleine Zündzeitpunktänderungen unterdrückt werden. Eine anschließende Einheit (7) bestimmt die zum zugeführten dynamischen Sollmomentanteil (M_{d}) gehörige Zündzeitpunktverschiebung (dZ) in Abhängigkeit von der Motordrehzahl (n) und der Motorlast (L) anhand eines abgelegten Kennfeldes. Ein Addierer (8) addiert diese Zündzeitpunktverschiebung (dZ) zu einem Zündzeitpunktbasiswert (Z_{B}), der von einer zugehörigen Zündzeitpunktberechnungseinheit (9) anhand eines abgelegten Kennfeldes in Abhängigkeit von der Motordrehzahl (n) und der Motorlast (L) bestimmt wird. Das Ausgangssignal des Addierers (8) wird über eine Einheit (10) geführt, die dazu dient, die Änderungsrate des ihr zugeführten Zündzeitpunktwertes auf ein vorgebbares Maß zu begrenzen. Das auf diese Weise gegebenenfalls in seiner Änderungsrate begrenzte Zündzeitpunktstellsignal wird dann über eine Einheit (11) geführt, die zur Absolutwertbegrenzung des Zündzeitpunktes dient, indem sie den ihr zugeführten Zündzeitpunktwert auf einen vorgebbaren Maximalwert begrenzt. Das daraus resultierende Zündzeitpunktstellsignal wird einem Addierer (12) zugeführt, der zu diesem Signal das Ausgangssignal einer Klopfregelungsstufe (13) üblicher Bauart addiert. Das Ausgangssignal dieses Addierers (12) dient dann als Stellsignal (Z_{S}) für die Zündzeitpunkteinstellung. Es versteht sich, daß der Zündzeitpunkt als Zündwinkel bezogen auf einen Referenzwinkel, z.B. den oberen Totpunkt des jeweiligen Hubkolbens eines Hubkolbenmotors, ausgedrückt werden kann.

Die gemäß Fig. 1 aufgebaute Vorrichtung erlaubt somit eine Motormomenteinstellung, die auch sehr schnellen Motorsollmomentänderungen vergleichsweise rasch zu folgen vermag und nach Beendigung einer Instationärphase vergleichsweise schnell wieder in einen abgasemissions- und kraftstoffverbrauchsoptimalen Betrieb übergeht.

In Fig. 2 ist eine zu derjenigen von Fig. 1 funktionell analoge Vorrichtung gezeigt, die sich für einen Dieselmotor mit elektronischer Dieseleinspritzung eignet. Soweit hierbei gleiche Komponenten und physikalische Größen wie in Fig. 1 dargestellt sind, erkennbar an der Verwendung gleicher Bezugszeichen, kann bezüglich deren Beschreibung auf das zu Fig. 1 Gesagte verwiesen werden. Als Modifikation ist anstelle der Luftmassenstromregelung eine Einrichtung zur Einstellung der Kraftstoffeinspritzdauer vorgesehen, die eine Einheit (2') zur Kraftstoffmassenberechnung und eine Einheit (3') zur Einspritzdauerberechnung umfaßt. Die Kraftstoffmassenberechnungseinheit (2') bestimmt die Kraftstoffmasse (m_{f}) anhand eines abgelegten Kennfeldes in Abhängigkeit von der zugeführten Motordrehzahl (n) und dem zugeführten Motorsollmoment (Mₛₒₗₗ). Aus dem ihr zugeführten Kraftstoffmassenwert (m_{f}) ermittelt die Einspritzdauerberechnungseinheit (3') anhand einer abgelegten Kennlinie die zugehörige Einspritzdauer und gibt diese Information als entsprechendes Einspritzdauerstellsignal (E_{DS}) ab.

Anstelle des Zündzeitpunkteinstellzweiges der Vorrichtung von Fig. 1 beinhaltet die Vorrichtung von Fig. 2 einen Einspritzbeginneinstellzweig, dem die Hochpaßfilterstufe (4, 5) mit motorbetriebspunktabhängig einstellbarer Abklingzeitkonstante (τ) vorgeschaltet ist und die eingangsseitig die Totzoneneinheit (6) aufweist. An die Totzoneneinheit (6) schließt sich eine Einheit (7') an, welche die zum zugeführten, dynamischen Motorsollmomentanteil (M_{d}) gehörige Einspritzbeginnverschiebung (dE_{B}) anhand eines abgelegten Kennfeldes in Abhängigkeit von der Motordrehzahl (n) und der Motorlast (L) ermittelt. Die ermittelte Einspritzbeginnverschiebung (dE_{B}) wird in einem anschließenden Addierer (8') zu einem Einspritzbeginnbasiswert (E_{BB}) addiert, der von einer zugehörigen Einspritzbeginnbestimmungseinheit (9') anhand eines abgelegten Kennfeldes in Abhängigkeit von der Motordrehzahl (n) und der Motorlast (L) berechnet wird. Das Ausgangssignal des Addierers (8') bildet dann das Einspritzbeginn-Stellsignal (E_{BS}). Es versteht sich, daß der Einspritzbeginn als ein Einspritzbeginnwinkel bezogen auf einen Referenzwinkel, z.B. den oberen Totpunkt des jeweiligen Hubkolbens eines Hubkolbenmotors, dargestellt werden kann.

Die Funktionsweise der Vorrichtung von Fig. 2 und die damit erzielten vorteilhaften Wirkungen entsprechen denjenigen der Vorrichtung von Fig. 1, worauf hier verwiesen werden kann. Der vergleichsweise rasch reagierende Einspritzbeginneinstellzweig regelt genau denjenigen dynamischen Motorsollmomentanteil (M_{d}) ein, der von der träger, d.h. quasistatisch reagierenden Einrichtung zur Einspritzdauereinstellung bei plötzlichen Motorsollmomentänderungen nicht eingeregelt werden kann. Nach Beendigung einer Instationärphase wird vergleichsweise rasch wieder auf die abgasemissions- und kaftstoffverbrauchsoptimale Betriebsweise übergegangen, bei der die Motormomenteinstellung allein über eine entsprechende Einstellung der Einspritzdauer erfolgt.

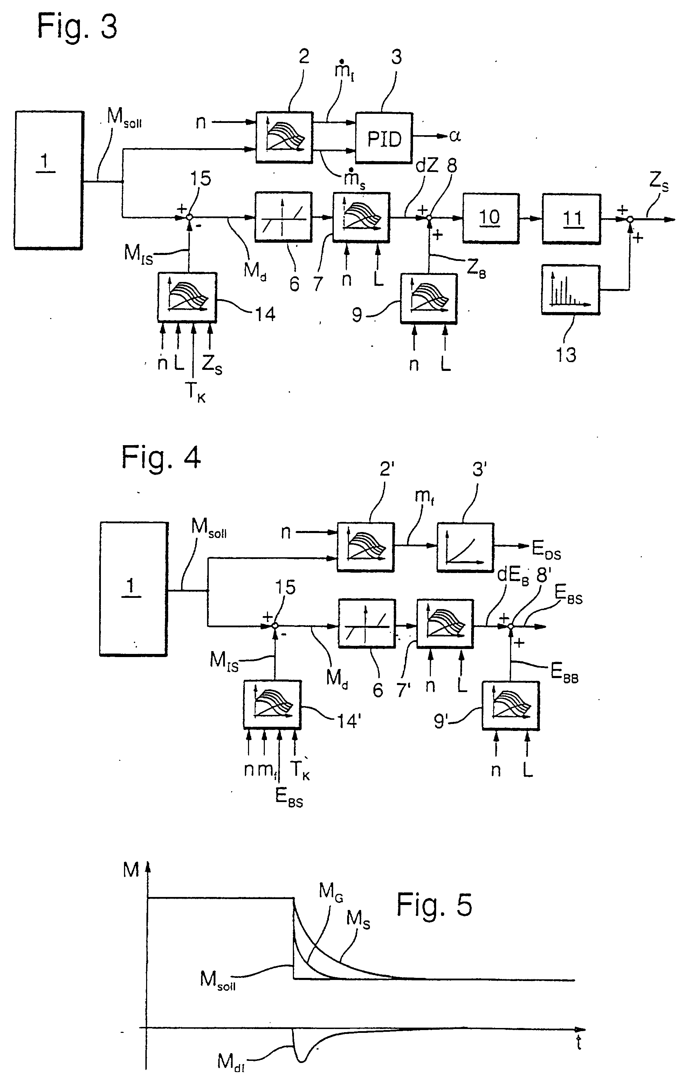

In Fig. 3 ist eine wiederum für einen Ottomotor geeignete Vorrichtung zur Motormomenteinstellung gezeigt, die derjenigen von Fig. 1 mit der Ausnahme entspricht, daß anstelle der dortigen Hochpaßfilterstufe eine modellbasierte Schätzwertstufe vorgesehen ist, die den dynamischen, von der Luftmassenregelung nicht einregelbaren Motorsollmomentanteil (M_{d}) anhand einer Schätzung des der Luftmassenstromregelung einstellbaren, quasistatischen Motormomentanteils (M_{IS}) ermittelt. Bezüglich der übrigen Komponenten kann auf die Beschreibung zu Fig. 1 verwiesen werden. Die Schätzwertstufe beinhaltet eine Schätzwertbestimmungseinheit (14) und einen Subtrahierer (15). Die Schätzwertbestimmungseinheit (14) schätzt den vom Luftmassenregelungszweig bewältigbaren, quasistatischen Motormomentanteil (M_{IS}) anhand eines abgelegten Modells für die Luftmassenstromregelung in Abhängigkeit von den zugeführten Istwerten der Motordrehzahl (n), der Motorlast (L), der Motorkühlwassertemperatur (T_{K}) und des Zündzeitpunktstellsignals (Z_{S}). Im einfachsten Fall kann dieses Modell von einem Kennfeld gebildet sein, das den quasistatischen Motormomentanteil (M_{IS}) der Luftmassenstromregelung als Funktion der vier genannten Eingangsgrößen festlegt. Der Schätzwert (M_{IS}) für den quasistatischen Motormomentanteil wird durch den Subtrahierer (15) vom angeforderten Motorsollmoment (Mₛₒₗₗ) abgezogen, und die sich ergebende Differenz wird als der vom Zündzeitpunkteinstellzweig einzuregelnde, dynamische Motorsollmomentanteil (M_{d}) an die Totzoneneinheit (6) weitergeleitet.

Die Funktionsweise der Vorrichtung von Fig. 3 und die damit erzielbaren, vorteilhaften Wirkungen entsprechen denjenigen der Vorrichtung von Fig. 1, worauf hier verwiesen werden kann. Insbesondere läßt sich folglich mit dieser Vorrichtung der von der Luftmassenstromregelung nicht ausgeregelte, dynamische Sollmomentanteil direkt durch eine geeignete Änderung des Zündzeitpunktes erheblich reduzieren. Das in der zugehörigen Einheit (7) zur Berechnung der Zündzeitpunktverschiebung abgelegte Kennfeld läßt sich leicht applizieren, da sich die für eine Motormomentänderung im jeweiligen Betriebspunkt erforderliche Zündzeitpunktverschiebung an einem Motorprüfstand stationär bestimmen läßt.

Die wiederum für einen Dieselmotor vorgesehene Vorrichtung von Fig. 4 ist mit derjenigen von Fig. 2 mit der Ausnahme identisch, daß anstelle der dortigen Hochpaßfilterstufe analog zur Modifikation der Vorrichtung von Fig. 3 gegenüber derjenigen von Fig. 1 eine Schätzwertstufe vorgesehen ist. Diese Schätzwertstufe entspricht im wesentlichen derjenigen von Fig. 3, wobei sie eine modifizierte Schätzwertbestimmungseinheit (14') beinhaltet, die anhand eines abgelegten Modells das vom Einspritzdauereinstellzweig noch bewältigbare, quasistatische Motormoment (M_{IS}) in Abhängigkeit der zugeführten Größen Motordrehzahl (n), Kraftstoffmasse (m_{f}), Einspritzbeginn-Stellsignal (E_{BS}) und Motorkühlwassertemperatur (T_{K}) schätzt. Der gewonnene Schätzwert (M_{IS}) wird dann vom anschließenden Subtrahierer (15) vom angeforderten Motorsollmoment (Mₛₒₗₗ) abgezogen. Das resultierende Differenzsignal wird als der vom Einspritzbeginneinstellzweig einzuregelnde, dynamische Motorsollmomentanteil (M_{d}) behandelt und der nachgeschalteten Totzoneneinheit (6) zugeführt. Die Funktionsweise der Vorrichtung von Fig. 4 und die mit ihr erzielbaren Vorteile entsprechen im übrigen denjenigen der Vorrichtung von Fig. 2, worauf hier verwiesen werden kann.

In Fig. 5 ist die Wirkungsweise der Vorrichtungen der Fig. 1 bis 4 in einem Diagramm des Motormoments (M) in Abhängigkeit von der Zeit (t) anhand eines Beispiels dargestellt, bei dem zu einem bestimmten Zeitpunkt eine sprungartige Reduzierung des angeforderten Motorsollmomentes (Mₛₒₗₗ) auftritt. Der vom quasistatisch reagierenden Luftmassenstromregelungszweig bzw. Einspritzdauereinstellzweig bewältigbare quasistatische Motormomentanteil (M_{S}) folgt der sprungartigen Sollmomentänderung nur vergleichsweise langsam. Hingegen reagiert der Zündzeitpunkteinstellzweig bzw. der Einspritzbeginneinstellzweig sehr rasch und liefert einen dynamischen Motormomentanteil (M_{dI}), der sehr schnell der sprungartigen Motorsollmomentänderung folgt. Das sich additiv aus dem dynamischen (M_{dI}) und dem quasistatischen Motormomentanteil (M_{S}) zusammensetzende, von der jeweiligen Vorrichtung insgesamt eingestellte Motormoment (M_{G}) folgt auf diese Weise der sprungartigen Motorsollmomentänderung sehr viel besser als allein der quasistatische Motormomentanteil (M_{S}). Sobald das eingestellte Gesamtmotormoment (M_{G}) annähernd den nun reduzierten Motorsollmomentwert (Mₛₒₗₗ) erreicht hat, geht der vom Zündzeitpunkteinstellzweig bzw. Einspritzbeginneinstellzweig bewirkte, dynamische Motormomentanteil (M_{dI}) wieder relativ rasch auf null zurück, wonach die Motormomenteinstellung auf den anschließend quasistatischen Motorsollmomentwert (Mₛₒₗₗ) wieder allein vom Luftmassenregelungszweig bzw. vom Einspritzdauereinstellzweig abgasemissions- und kraftstoffverbrauchsoptimal übernommen wird. Eine analoge Arbeitsweise ergibt sich selbstverständlich für hochdynamische Erhöhungen des Motorsollmomentes.

## Patentansprüche

1. Verfahren zur Motormomenteinstellung bei einem Verbrennungsmotor mit Zündzeitpunkt- und Luftmassenstromregulierung oder mit Kraftstoffeinspritzbeginn- und Kraftstoffeinspritzdauerregulierung wobei
- aus einem angeforderten Motorsollmoment (Mₛₒₗₗ) ein dynamischer Sollmomentanteil (M_{d}) ermittelt wird und
- der dynamische Sollmomentanteil (M_{d}) als Vorgabe für eine entsprechende Zündzeitpunktverschiebung (dZ) bzw. Einspritzbeginnverschiebung (dE_{B}) herangezogen wird,
**dadurch gekennzeichnet, daß**
- der verbleibende, quasistatische Sollmomentanteil durch entsprechende Einstellung des Luftmassenstroms bzw. der Einspritzdauer eingestellt wird.

2. Verfahren nach Anspruch 1, weiter
**dadurch gekennzeichnet, daß**
der dynamische Sollmomentanteil (M_{d}) durch eine Hochpaßfilterung des angeforderten Motorsollmomentes (Mₛₒₗₗ) mit einer motorbetriebspunktabhängig vorgebbaren Abklingzeitkonstante (τ) ermittelt wird.

3. Verfahren nach Anspruch 1, weiter
**dadurch gekennzeichnet, daß**
anhand eines Modells der Luftmassenstrom- bzw. Kraftstoffeinspritzdauerregulierung der von dieser einstellbare quasistatische Sollmomentanteil geschätzt und durch Subtraktion dieses Schätzwertes vom angeforderten Motorsollmoment (Mₛₒₗₗ) der dynamische Sollmomentanteil (M_{d}) ermittelt wird.

4. Vorrichtung zur Motormomenteinstellung bei einem Verbrennungsmotor mit Zündzeitpunkt- und Luftmassenstromregulierung oder mit Kraftstoffeinspritzbeginn- und Kraftstoffeinspritzdauerregulierung, mit
- einer Einrichtung (2, 3; 2', 3') zur Einstellung des Luftmassenstroms bzw. der Kraftstoffeinspritzdauer,
- einer Einrichtung (6 bis 13) zur Einstellung des Zündzeitpunktes bzw. des Kraftstoffeinspritzbeginns,
- einer Einrichtung (1) zur Anforderung eines Motorsollmomentes (Mₛₒₗₗ) und
- einer Einrichtung (4, 5; 14, 15) zur Ermittlung eines von der Einrichtung zur Luftmassenstromeinstellung bzw. zur Kraftstoffeinspritzdauereinstellung nicht einregelbaren, dynamischen Sollmomentanteils (M_{d}) des angeforderten Motorsollmomentes (Mₛₒₗₗ), wobei der ermittelte dynamische Sollmomentanteil der Zündzeitpunkt bzw. der Einspritzbeginneinstelleinrichtung als Vorgabe für eine entsprechende Verschiebung des Zündzeitpunktes bzw. des Einspritzbeginns zugeführt wird, **dadurch gekennzeichnet, daß** der verbleibende, quasistatische Sollmomentanteil von der Einrichtung zur Einstellung des Luftmassenstroms bzw. der Einspritzdauer entsprechend eingeregelt wird.

5. Vorrichtung nach Anspruch 4, weiter
**dadurch gekennzeichnet, daß**
die Einrichtung zur Ermittlung des dynamischen Sollmomentanteils (M_{d}) eine Hochpaßfilterstufe (4, 5) mit motorbetriebspunktabhängig veränderlicher Abklingzeitkonstante (τ) beinhaltet.

6. Vorrichtung nach Anspruch 4, weiter
**dadurch gekennzeichnet, daß**
die Einrichtung zur Ermittlung des dynamischen Sollmomentanteils (M_{d}) eine Schätzstufe (14, 15) beinhaltet, die anhand eines abgelegten Modells einen quasistatischen, von der Luftmassenstrom-- bzw. der Einspritzdauereinstelleinrichtung einregelbaren Motormomentanteil schätzt und durch Subtraktion dieses Schätzwertes vom angeforderten Motorsollmoment (Mₛₒₗₗ) den dynamischen Sollmomentanteil (M_{d}) ermittelt.

## Claims

1. A process for engine torque adjustment in an internal combustion engine with ignition point and mass air flow regulation or with fuel injection start and fuel injection period regulation,
- a dynamic reference torque component (M_{d}) being determined from a requested engine reference torque (M_{ref}) and
- the dynamic reference torque component (M_{d}) being used as the setpoint value for a corresponding shifting of the ignition point (dZ) or injection start (dE_{B}),
**characterised in that**
- the remaining, quasi-static torque component is set by setting the mass air flow or injection period accordingly.

2. A process in accordance with claim 1, further
**characterised in that**
the dynamic reference torque component (M_{d}) is determined by high-pass filtering the requested engine reference torque (M_{ref}) with a damping time constant which can be pre-determined dependent upon the engine operating point.

3. A process in accordance with claim 1, further
**characterised in that**
using a model of the mass air flow or fuel injection period regulation system the quasi-static reference torque component which can be set by said system is estimated and the dynamic reference torque component (M_{d}) is determined by subtracting this estimated value from the requested engine reference torque (M_{ref}).

4. A device for setting the engine torque in an internal combustion engine with ignition point and mass air flow regulation or with fuel injection start and fuel injection period regulation, with
- a device (2, 3; 2', 3') for setting the mass air flow or the fuel injection period,
- a device (6 to 13) for setting the ignition point or the fuel injection start,
- a device (1) for requesting an engine reference torque (M_{ref}), and
- a device (4, 5; 14, 15) for determining a dynamic reference torque component (M_{d}) of the requested engine reference torque (M_{ref}) which can be adjusted neither by the device for setting the mass air flow nor the device for setting the fuel injection period, the dynamic reference torque component thus determined being fed to the ignition point or injection start setting device as a setpoint value for a corresponding shifting of the ignition point or injection start,
**characterised in that**
the remaining, quasi-static reference torque component is adjusted accordingly by the device for setting the mass air flow and/or the injection period.

5. A device in accordance with claim 4,
**characterised in that**
the device for determining the dynamic reference torque component (M_{d}) contains a high-pass filter stage (4, 5) with damping time constants (τ) which can be modified dependent upon the engine operating point.

6. A device in accordance with claim 4, further
**characterised in that**
the device for determining the dynamic reference torque component (M_{d}) contains an estimation stage (14, 15) which, using a stored model, estimates a quasi-static engine torque component which can be adjusted by the mass air flow or injection period setting device and determines the dynamic reference torque component (M_{d}) by subtracting this estimated value from the requested engine reference torque (M_{ref}).

## Revendications

1. Procédé de réglage du couple moteur pour un moteur à combustion interne avec régulation du point d'allumage et du débit massique d'air ou avec régulation du début et de la durée de l'injection de carburant,
- une part dynamique (M_{d}) de couple de consigne étant déterminée à partir d'un couple moteur de consigne (Mₛₒₗₗ) requis et
- la part dynamique (M_{d}) de couple de consigne étant utilisée comme prescription pour un décalage correspondant du point d'allumage (dZ) ou du début d'injection (dE_{B}),
**caractérisé en ce que**
- la part résiduelle de couple de consigne, quasi statique, est réglée par un réglage correspondant du débit massique d'air ou de la durée d'injection.

2. Procédé selon la revendication 1, **caractérisé en ce que** la part dynamique (M_{d}) de couple de consigne est déterminée par un filtrage passe-haut du couple moteur de consigne (Mₛₒₗₗ) requis, avec une constante (τ) de temps de descente pouvant être prescrite en fonction du point de fonctionnement du moteur.

3. Procédé selon la revendication 1, **caractérisé en ce que**, à l'aide d'un modèle de régulation du débit massique d'air ou de la durée d'injection de carburant, on estime la part quasi statique de couple de consigne qui peut être réglée par cette régulation, et on détermine la part dynamique (M_{d}) de couple de consigne en soustrayant du couple moteur de consigne (Mₛₒₗₗ) requis cette valeur estimée.

4. Dispositif de réglage du couple moteur pour un moteur à combustion interne avec régulation du point d'allumage et du débit massique d'air ou avec régulation du début et de la durée de l'injection de carburant, comprenant
- un équipement (2, 3 ; 2', 3') pour régler le débit massique d'air ou la durée d'injection de carburant,
- un équipement (6 à 13) pou régler le point d'allumage ou le début d'injection de carburant,
- un équipement (1) pour demander un couple moteur de consigne (Mₛₒₗₗ), et
- un équipement (4, 5 ; 14, 15) pour déterminer une part dynamique (M_{d}) de couple de consigne du couple moteur de consigne (Mₛₒₗₗ) requis qui ne peut pas être réglée par l'équipement pour le réglage du débit massique d'air ou pour le réglage de la durée d'injection de carburant,
la part dynamique de couple de consigne déterminée étant apportée au point d'allumage ou à l'équipement de réglage du début d'injection comme prescription pour un décalage correspondant du point d'allumage ou du début d'injection,
**caractérisé en ce que**
la part résiduelle de couple de consigne, quasi statique, est réglée d'une manière correspondante par l'équipement de réglage du débit massique d'air ou de la durée d'injection.

5. Dispositif selon la revendication 4, **caractérisé en ce que** l'équipement pour déterminer la part dynamique (M_{d}) de couple de consigne comprend un étage de filtre passe-haut (4, 5) avec une constante (τ) de temps de descente variable en fonction du point de fonctionnement du moteur.

6. Dispositif selon la revendication 4, **caractérisé en ce que** l'équipement pour déterminer la part dynamique (M_{d}) de couple de consigne comprend un étage d'estimation (14, 15) qui, à l'aide d'un modèle mémorisé, estime la part quasi statique de couple de consigne qui peut être réglée par l'équipement de réglage du débit massique d'air ou de la durée d'injection de carburant, et qui détermine la part dynamique (M_{d}) de couple de consigne en soustrayant du couple moteur de consigne (Mₛₒₗₗ) requis cette valeur estimée.
